# EUROPÄISCHE PATENTSCHRIFT

(11) **EP 1 484 165 B1**
(45) Veröffentlichungstag und Bekanntmachung des Hinweises auf die Patenterteilung: **27.06.2012**
(21) Anmeldenummer: 04012536.1
(22) Anmeldetag: 27.05.2004
(51) Int. Cl.: B29C 70/44, B29C 70/54, B29C 35/08, B29C 35/02, G01N 25/18

(54) **Verfahren zur Überwachung der Herstellung eines Bauteils aus einem faserverstärkten Werkstoff**
Method for monitoring the manufacture of a fibre reinforced moulded part
Procédé de surveillance de la fabrication d'un article renforcé par des fibres

(30) Priorität: 02.06.2003 DE 10326021
(43) Veröffentlichungstag der Anmeldung: 08.12.2004
(73) Patentinhaber: Deutsches Zentrum für Luft- und Raumfahrt e.V., 51147 Köln (DE)
(72) Erfinder: Feiler, Markus, 70563 Stuttgart (DE); Chatzigeorgiou, Lazarula, 70565 Stuttgart (DE); Aoki, Rudolfo, 70597 Stuttgart (DE)
(74) Vertreter: Hoeger, Stellrecht & Partner Patentanwälte

(56) Entgegenhaltungen:
- EP-A- 1 136 238
- DE-C1- 19 912 723
- US-A1- 2002 022 422

## Beschreibung

Die Erfindung betrifft ein Verfahren zur Überwachung der Herstellung eines Bauteils aus einem faserverstärkten Werkstoff.

Beispielsweise aus der EP 1 136 238 A2 ist ein Verfahren zur Herstellung eines Bauteils aus einem faserverstärkten Werkstoff bekannt, bei welchem einem Faserhalbzeug mittels Unterdruckbeaufschlagung flüssiges Harz zugeführt wird. Solch ein Verfahren wird auch als Vakuuminjektionsverfahren bezeichnet. Es sind auch Verfahren bekannt, bei denen die Harzimprägnierung bzw. Harzinfiltration des Fasergeleges des Faserhalbzeugs ohne Unterdruckbeaufschlagung stattfindet.

Aus der DE 199 12 723 C1 ist ein Verfahren zur Bestimmung der Durchtränkung von Faserhalbzeugen bekannt, wobei Harz in Fasermaterial injiziert wird und durch das Fasermaterial fließt. Es wird die Reflexion des Faserhalbzeugs an einer Vielzahl von Positionen gemessen und es wird die Änderung des Reflexionsgrads ausgewertet.

Der Erfindung liegt die Aufgabe zugrunde, ein Verfahren zur Überwachung der Herstellung eines Bauteils aus einem faserverstärkten Werkstoff bereitzustellen.

Diese Aufgabe wird bei dem eingangs genannten Verfahren, wobei das Bauteil durch Infiltration eines Faserhalbzeugs mit flüssigem Harz hergestellt wird, erfindungsgemäß dadurch gelöst, daß während des Infiltrationsvorgangs der Prüfling mit modulierten Wärmewellen thermisch angeregt wird und das Antwortsignal registriert wird.

Durch das erfindungsgemäße Verfahren wird eine photothermische Meßmethode bereitgestellt, um den Infiltrationsvorgang zu überwachen. Durch die modulierten Wärmewellen wird der Prüfling thermisch angeregt und über das Antwortsignal lassen sich Aussagen über den Prüfling gewinnen. Es hat sich gezeigt, daß dieses Verfahren geeignet ist, einen Harzfrontenverlauf während des instationären, veränderlichen Vorgangs der Harzinfiltration zu ermitteln.

Über die Ermittlung des Harzfrontenverlaufs lassen sich beispielsweise Lufteinschlüsse ermitteln, die bei einem fertigen Bauteil zu einer Qualitätsminderung führen könnten. Die Überwachung läßt sich dabei zerstörungsfrei durchführen. Es läßt sich auch ein Lufteintritt in den Prüfling nach Beendigung der Harzinfiltration im Thermographiebild beobachten.

Grundsätzlich ist es auch möglich, chemische Reaktionen des Harzsystems (der Matrix) über den Harzfrontenverlauf zu ermitteln und so Informationen über den Vernetzungsgrad im Bauteil zu ermitteln.

Erfindungsgemäß wird ein Verfahren bereitgestellt, mit dem sich tiefenaufgelöst und zerstörungsfrei der Harzfrontenverlauf in seiner zeitlichen Entwicklung verfolgen läßt. Diese Tiefenauflösung wird bei einem inhomogenen instationären System mit veränderlichen physikalischen und chemischen Eigenschaften erreicht.

Durch das erfindungsgemäße Verfahren läßt sich eine Qualitätssicherung bezüglich der hergestellten Bauteile durchführen, wobei diese Qualitätssicherung herstellungsprozeß-begleitend ist. Das erfindungsgemäße Verfahren läßt sich auf einfache und kostengünstige Weise durchführen. Insbesondere ist es einsetzbar bei einem Mehrschichtenaufbau einer Anordnung zur Herstellung des entsprechenden Bauteils. Beispielsweise läßt sich der Prüfling auch durch eine Vakuumfolie hindurch überwachen, unter der der Prüfling zur Harzimprägnierung angeordnet ist.

Mittels des erfindungsgemäßen Verfahrens lassen sich beispielsweise auch oberflächennahe Bereiche gezielt untersuchen, indem entsprechend große Frequenzen gewählt werden. Dadurch lassen sich beispielsweise Undichtigkeiten in einem Verteilermedium wie einem Verteilergewebe erkennen und damit läßt sich beispielsweise das Eindringen von Luft erkennen. Ebenso lassen sich Ausgasungen erkennen. Dadurch wiederum läßt sich die Überwachung optimieren, um so ein hochqualitatives Bauteil herstellen zu können.

Weiterhin ist es möglich, den Geschwindigkeitsverlauf einer Harzfront während der Herstellung zu ermitteln. Dieser kann beispielsweise aus der Phasensignatur und/oder Amplitudensignatur des Antwortsignals ermittelt werden. Über den ermittelten Geschwindigkeitsverlauf läßt sich die Infiltration mit Harz besser überwachen. Weiterhin ist es möglich, die Herstellung des Bauteils zu automatisieren. Beispielsweise können über den Geschwindigkeitsverlauf der Harzfront Infiltrationszeiten berechnet oder abgeschätzt werden. Dadurch wiederum läßt sich das Infiltrationsende ermitteln. Beispielsweise kann dann die Harzzufuhr unter Kenntnis der Infiltrationszeit automatisch abgeschaltet werden.

Insbesondere wird dabei der Prüfling flächig mit Wärmewellen beaufschlagt, um so den Prüfling über einen großen Oberflächenbereich thermisch anzuregen. Dadurch erhält man ein Antwortsignal, aus dem sich ein Harzfrontenverlauf bezogen auf eine Bildebene ermitteln läßt, die entsprechend einen großen Flächenbereich abdeckt. Der Prüfling kann auch volumetrisch thermisch angeregt werden, beispielsweise über Mikrowellen oder Induktionsheizung.

Es kann vorgesehen sein, daß das Antwortsignal in Reflexion ermittelt wird. Es ist auch alternativ oder zusätzlich möglich, daß das Antwortsignal in Transmission ermittelt wird.

Ganz besonders vorteilhaft ist es, wenn der Prüfling in Richtung eines Verteilergewebes mit Wärmewellen beaufschlagt wird. Das Verteilergewebe ist verantwortlich für die Harzzuführung zu den Fasergelegen des Faserhalbzeugs. Das Verteilergewebe bestimmt somit die Harzzuführung zu dem Faserhalbzeug. Das Verteilergewebe ist dann wiederum verantwortlich für die Ausbildung von Harzfronten. Durch eine Beaufschlagung des Verteilergewebes mit photothermischer Strahlung lassen sich entsprechend die Laminatschichten unterhalb des Verteilergewebes thermisch anregen und so wiederum läßt sich der Harzfrontenverlauf, welcher durch das Verteilergewebe verursacht ist, ermitteln. Daraus lassen sich dann Lufteinschlüsse und dergleichen ermitteln.

Ganz besonders vorteilhaft ist es, wenn das Antwortsignal durch eine Kamera registriert wird. Über die Kamera läßt sich das Antwortsignal des Prüflings über eine große Oberfläche aufnehmen, das heißt es werden gleichzeitig Signale über einen großen Flächenbereich registriert. Bei der Kamera handelt es sich insbesondere um eine Infrarot-Kamera, welche ein Thermographie-Antwortsignal des Prüflings registriert.

Insbesondere wird der Prüfling optisch bestrahlt mit entsprechenden Lampen, welche intensitätsmoduliert oder pulsmoduliert sind.

Insbesondere vorteilhaft ist es, wenn die Wärmewellen intensitätsmoduliert sind. Es kann dann die Temperaturmodulation an allen Punkten des Prüflings, welche durch die modulierten Wärmewellen angeregt werden, flächig verfolgt werden. Amplitude und Phase lassen sich an jedem Bildpunkt über eine Auswerteeinrichtung bestimmen, beispielsweise durch pixelweise Fourieranalyse. Ein solches Verfahren wird auch als phasenempfindliche Modulationsthermographie oder Lockin-Thermographie bezeichnet. Erfindungsgemäß wird die phasenempfindliche Modulationsthermographie für die Überwachung von Harzimprägnierungsvorgängen eingesetzt.

Günstigerweise wird ein Geschwindigkeitsprofil einer fortschreitenden Harzfront in der Phasensignatur und der Amplitudensignatur ermittelt. Beispielsweise wird ein Phasenbild und ein Amplitudenbild ermittelt. Daraus kann dann auf Lufteinschlüsse und dergleichen, die sich im Geschwindigkeitsprofil äußern, geschlossen werden und damit wiederum eine prozeßbegleitende Qualitätssicherung durchgeführt werden.

Ganz besonders vorteilhaft ist es, wenn eine Phasensignatur-Auswertung durchgeführt wird und alternativ oder zusätzlich eine Amplitudensignatur-Auswertung durchgeführt wird. Dadurch kann man einen Harzfrontenverlauf insbesondere bezüglich des entsprechenden Geschwindigkeitsprofils ermitteln und daraus wiederum Aussagen über Lufteinschlüsse und dergleichen gewinnen. Die Auswertung über die Phasensignatur hat den Vorteil, daß eine größere Tiefenreichweite erzielbar ist, da die Phase (anders als die Amplitude) weitgehend unabhängig von Beleuchtungsinhomogenitäten und Oberflächenfehler des Prüflings ist. Vergleichsmessungen haben ergeben, daß mit einer Phasensignatur-Auswertung eine ca. zweifach größere Tiefenreichweite als mit einer Amplitudensignatur-Auswertung erreichbar ist.

Die Amplitudensignatur und/oder Phasensignatur wird vorzugsweise über Fouriertransformation ermittelt.

Es hat sich gezeigt, daß für die Überwachung der Harzimprägnierung ein tiefer Frequenzbereich mit Frequenzen unterhalb 1 Hz und insbesondere unterhalb 0,5 Hz gewählt werden muß. Bei den genannten Frequenzen haben sich aussagekräftige Amplitudenbilder und Phasenbilder ergeben, aus denen Lufteinschlüsse und dergleichen ermittelbar sind.

Es hat sich ferner als günstig erwiesen, wenn die Frequenz größer als 0,0001 Hz ist und insbesondere größer als 0,001 Hz ist.

Insbesondere wird ein nicht-stationärer Temperaturzustand gemessen, das heißt es wird nicht gewartet, bis sich ein stationärer Temperaturzustand einstellt, da eben bei der Harzimprägnierung die Prozesse selber nicht-stationär sind.

Das erfindungsgemäße Verfahren läßt sich anwenden, wenn der Prüfling einen Schichtaufbau mit Faserhalbzeugschichten aufweist.

Insbesondere weist der Schichtaufbau ein Verteilergewebe für das Harz auf, welches auf dem Faserhalbzeug angeordnet ist. Ein solcher Schichtaufbau ist verantwortlich für die Ausbildung einer keilförmigen Harzfront, die im ungünstigen Fall zu Lufteinschlüssen führen kann, die sich negativ auf die Qualität eines hergestellten Bauteils auswirken können.

Das erfindungsgemäße Verfahren läßt sich auch einsetzen, wenn ein solches Verteilergewebe vorhanden ist und insbesondere lassen sich Geschwindigkeitsprofile der Harzfront ermitteln, die durch das Verteilergewebe verursacht sind.

Günstig ist es, wenn ein definierter Kalibrierungsprüfling hergestellt wird und an diesem eine geeignete Frequenz oder ein geeigneter Frequenzbereich für die Modulation ermittelt wird. Grundsätzlich ist die optimierte Frequenz bzw. der optimierte Frequenzbereich zur Überwachung der Harzinfiltration in einem Prüfling abhängig von dem Prüfling selber. Wenn ein definierter Kalibrierungsprüfling hergestellt wird, welcher grundsätzlich den gleichen Aufbau wie der Prüfling hat (insbesondere bezüglich des Faserhalbzeugs) und bei dem eine grundsätzlich gleiche Harzinfiltration durchgeführt wird, wie bei dem herzustellenden Bauteil, dann kann an diesem Kalibrierungsprüfling die optimierte Frequenz ermittelt werden. Beispielsweise werden in den Kalibrierungsprüfling gezielte Störungen wie Folienstreifen an einer Unterseite eingebaut. Die Frequenz wird so gewählt, daß sich die Störungen erkennen lassen. Mit der so bestimmten Frequenz kann dann die Herstellung eines eigentlichen Bauteils überwacht werden.

Es kann vorgesehen sein, daß die Frequenz der Modulation variiert wird. Dadurch kann ein Bauteil beispielsweise mit mindestens zwei Frequenzen untersucht werden, um so beispielsweise einen oberflächennahen Bereich und einen Tiefenbereich untersuchen zu können.

Beispielsweise wird eine größere Frequenz zur Überprüfung oberflächennaher Bereiche und eine kleinere Frequenz zur Überprüfung tieferer Bereiche verwendet. Bei der Untersuchung oberflächennaher Bereiche lassen sich beispielsweise Undichtigkeiten in einem Verteilergewebe erkennen; es läßt sich das Eindringen von Luft erkennen oder es lassen sich Ausgasungen erkennen. Über eine Tiefenuntersuchung läßt sich der Harzfrontverlauf bestimmen.

Ganz besonders vorteilhaft ist es, wenn der Geschwindigkeitsverlauf einer Harzfront ermittelt wird. Der Geschwindigkeitsverlauf läßt sich aus der Phasensignatur und/oder Amplitudensignatur des Antwortsignals bestimmen. Über den Geschwindigkeitsverlauf lassen sich Störungen bei der Harzinfiltration erkennen. Weiterhin ist es möglich, über einen bekannten Geschwindigkeitsverlauf Infiltrationszeiten zu berechnen bzw. abzuschätzen. Dies ermöglicht eine Automatisierung der Bauteilherstellung, da beispielsweise über das berechnete bzw. abgeschätzte Infiltrationszeitresultat die Harzzufuhr automatisch gestoppt werden kann.

Das erfindungsgemäße Verfahren läßt sich auch einsetzen, wenn eine Vakuumfolie vorgesehen ist, da die thermische Anregung auch durch die Vakuumfolie hindurch stattfinden kann.

Die nachfolgende Beschreibung bevorzugter Ausführungsformen dient im Zusammenhang mit der Zeichnung der näheren Erläuterung der Erfindung.
Es zeigen:
- Figur 1: eine schematische seitliche Schnittansicht einer Anordnung zur Herstellung eines Bauteils aus einem faserverstärkten Werkstoff mittels Harzimprägnierung;
- Figur 2: eine schematische Ansicht einer Meßanordnung zur Überwachung des Harzverlaufs bei dem Prüfling gemäß Figur 1;
- Figuren 3(a), 3(b): ein aufgezeichnetes Phasenbild für einen Beispielprüfling zu verschiedenen Zeiten;
- Figur 3(c): den Phasenverlauf längs der Linie X gemäß Figur 3 (b);
- Figuren 4(a), (b): Amplitudenbilder, welche für den gleichen Prüfling ermittelt wurden;
- Figur 4(c): den Amplitudenverlauf längs X gemäß Figur 4(b), und
- Figur 5: die Tiefenreichweite in Abhängigkeit der Frequenz in doppeltlogarithmischer Darstellung an einem speziell präparierten Prüfling, wobei die obere Kurve durch Auswertung der Phasensignatur erhalten wurde und die untere Kurve durch Auswertung der Amplitudensignatur.

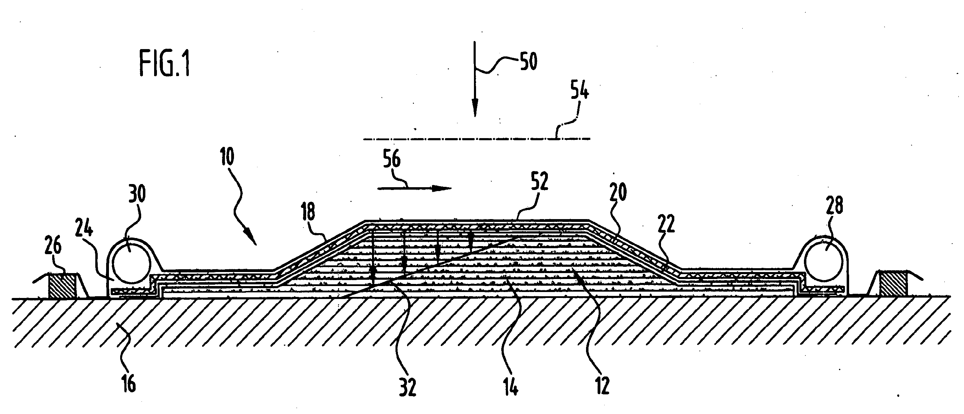

Ein Beispiel einer als Ganzes mit 10 bezeichneten Anordnung zur Herstellung eines Bauteils aus einem faserverstärkten Werkstoff ist in Figur 1 gezeigt. Eine entsprechende Anordnung sowie ein Verfahren und eine Vorrichtung zur Herstellung eines Werkstücks aus einem faserverstärkten Werkstoff mittels Harzimprägnierung sind in der EP 1 136 238 A2 beschrieben, auf die hiermit ausdrücklich Bezug genommen wird.

Ein Faserhalbzeug 12, welches eine Mehrzahl von Laminatschichten 14 (Fasergelegen) umfaßt, ist auf einer Form 16 angeordnet. Nach außen hin ist das Faserhalbzeug 12 durch eine Vakuumfolie 18 abgedeckt.

Oberhalb des Faserhalbzeugs 12 ist ein Verteilergewebe 20 angeordnet, welches das Faserhalbzeug 12 abdeckt. Über das Verteilergewebe 20 wird dem Faserhalbzeug 12 flüssiges Harz zur Harzimprägnierung des Faserhalbzeugs 12 zugeführt.

Es kann noch vorgesehen sein, daß zwischen dem Verteilergewebe 20 und dem Faserhalbzeug 12 eine Trennfolie 22 angeordnet ist, die dazu dient, daß nach Fertigstellung das Verteilergewebe 20 leichter von dem Bauteil gelöst werden kann und das Bauteil mit glatterer Oberfläche hergestellt wird.

Durch die Vakuumfolie 18 ist ein Vakuumraum 24 gebildet, in dem das zu imprägnierende Faserhalbzeug 12 positioniert ist. Gegenüber der Form 16 ist dieser Vakuumraum 24 durch eine Dichtung 26 abgedichtet.

Der Vakuumraum 24 läßt sich mit Unterdruck beaufschlagen, um die Harzinfiltration des Faserhalbzeugs 12 zu fördern. Dazu mündet in den Vakuumraum 24 ein Sauganschluß 28 einer Pumpe (in der Zeichnung nicht gezeigt) über die sich eben der Unterdruck im Vakuumraum 24 erzeugen läßt.

In den Vakuumraum 24 mündet ein Zuführungsanschluß 30 für flüssiges Harz, über den dem Verteilergewebe 20 Harz zuführbar ist, das dann wiederum von dem Verteilergewebe 20 aus das Faserhalbzeug 12 infiltriert.

Bei dem sogenannten VARI-Verfahren (vacuum assisted resin infusion process) wird dem Faserhalbzeug 12 mittels Unterdruckbeaufschlagung flüssiges Harz zugeführt, wobei als Harz ein heißhärtendes Harz verwendet wird und die Unterdruckbeaufschlagung so gesteuert wird und/oder geregelt werden, daß bezogen auf das flüssige Harz die Siedepunktkurve des Harzes nicht überschritten wird. Dieses Verfahren ist in der EP 1 136 238 A2 beschrieben, auf die ausdrücklich Bezug genommen wird.

Bei der Harzinfiltrierung bildet sich eine Harzfront 32 aus, die einen keilförmigen Verlauf hat. Diese Ausbildung der Harzfront ist darauf zurückzuführen, daß das flüssige Harz über den Zuführungsanschluß 30 eingekoppelt wird und das Eindringen des Harzes in das Faserhalbzeug 12 nicht zeitgleich über die gesamte Oberfläche des Faserhalbzeugs 12 erfolgt.

Es besteht das grundsätzliche Problem, daß aufgrund der Harzfrontausbildung sich Lufteinschlüsse während der Harzimprägnierung ausbilden können, die sich auf die Stabilität des fertigen Bauteils auswirken können.

Erfindungsgemäß wird ein Verfahren bereitgestellt, mit dem sich die Herstellung des Bauteils überwachen läßt, indem der Harzfrontverlauf ermittelt wird.

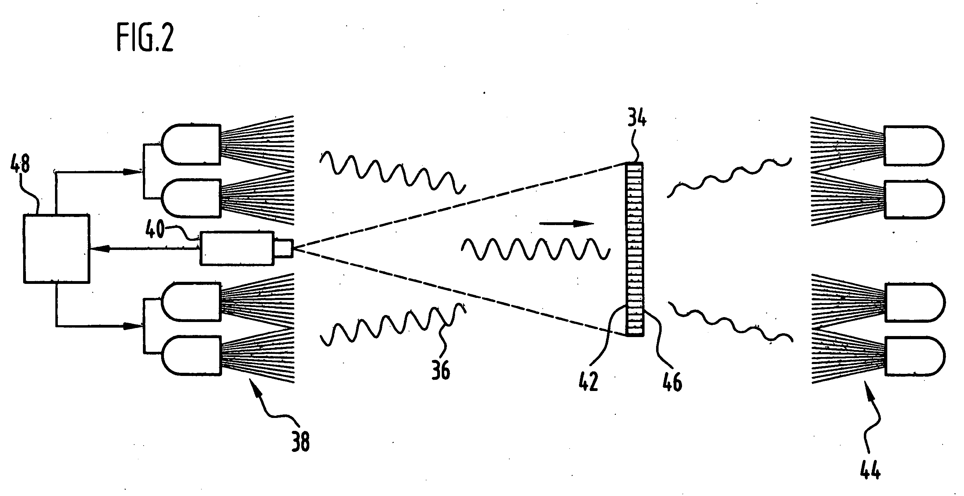

Dazu wird, wie in Figur 2 angedeutet, ein Prüfling 34 mit modulierten Wärmewellen 36 beaufschlagt. Die Wärmewellen 36 werden von einer Beleuchtungsvorrichtung 38 geliefert. Der Prüfling 34 wird dadurch thermisch angeregt und eine Infrarot-Kamera 40 registriert das entsprechende Antwortsignal des Prüflings 34.

Die Beleuchtungsvorrichtung 38 ist dabei so ausgebildet, daß eine Oberfläche 42 des Prüflings großflächig strahlungsbeaufschlagbar ist. Die Infrarot-Kamera 40 registriert ein Antwortsignal der gesamten Oberfläche 42. Bei der Infrarot-Kamera 40 handelt es sich insbesondere um eine hochauflösende Kamera.

Das Antwortsignal kann in Reflexion gemessen werden, wobei dann die Beleuchtungsvorrichtung 38 und die Kamera 40 auf der gleichen Seite bezüglich der Oberfläche 42 angeordnet sind.

Es kann auch vorgesehen sein, daß der Prüfling 34 in Transmission gemessen wird. Es ist dann eine Beleuchtungsvorrichtung 44 vorgesehen, welche bezüglich des Prüflings 34 auf der anderen Seite angeordnet ist wie die Kamera 40.

Bei dem in Figur 2 gezeigten Beispiel bestrahlt dann die Beleuchtungsvorrichtung 44 eine Oberfläche 46 des Prüflings 34, welche der Oberfläche 42 gegenüberliegt.

Es ist auch möglich, daß gleichzeitig in Reflexion und Transmission gemessen wird. Bei dickeren Bauteilen wird vorzugsweise in Reflexion gemessen.

Die Wärmewellen 36 sind insbesondere amplitudenmoduliert, das heißt die Oberfläche 42 bzw. 46 wird mit intensitätsmodulierter Strahlung beaufschlagt. Es hat sich als günstig erwiesen, wenn die Frequenz im Bereich zwischen 0,5 Hz und 0,001 Hz liegt. Es haben sich in diesem Frequenzbereich Prozeßabläufe für die Hauptinfiltrierung bei der Herstellung eines Bauteils aus einem faserverstärkten Werkstoff beobachten lassen. Die Erfahrung zeigt, daß für glasfaserverstärkte Faserhalbzeuge aufgrund der schlechteren Temperaturleitfähigkeit die Frequenzen eher niedriger zu wählen sind.

Es ist eine Auswerteeinrichtung 48 vorgesehen, welche an die Beleuchtungsvorrichtung 38 (und gegebenenfalls 44) gekoppelt ist und ebenfalls an die Infrarot-Kamera 40 gekoppelt ist, so daß die Anregungssignale und Antwortsignale in Relation zueinander gesetzt werden können. Die Infrarot-Kamera 40 zeichnet das photothermische Antwortverhalten des Prüflings 34 auf die Wärmewellenanregung auf.

Mittels der Auswerteeinrichtung 48 wird über Fouriertransformation, die örtlich pixelweise durchgeführt wird, die Phasensignatur und/oder die Amplitudensignatur ermittelt. Beispielsweise wird das Amplitudenbild und das Phasenbild aus dem Antwortsignal ermittelt. Die Infrarot-Kamera 40 liefert die entsprechenden Thermographiedaten an die Auswerteeinrichtung 48, um diese Auswertung durchführen zu können. Ein solches Verfahren wird auch als phasenempfindliche Modülationsthermographie oder Lockin-Thermographie bezeichnet.

Eine einfache Auswertbarkeit erhält man, wenn die modulierten Wärmewellen sinusmoduliert sind. Es ist aber auch grundsätzlich möglich, daß diese pulsmoduliert oder auf andere Weise moduliert sind.

Mittels des erfindungsgemäßen Verfahrens werden instationäre veränderliche Vorgänge im Prüfling 34 beobachtet. Dementsprechend wird für die Messung auch nicht gewartet, bis sich stationäre Bedingungen einstellen.

Es wird das tiefenaufgelöste Geschwindigkeitsprofil der Harzfront 32 im Prüfling 34 im Phasenbild und Amplitudenbild ermittelt. Dies steht im Gegensatz zum bekannten Einsatz der Lockin-Thermographie bei Werkstoffen mit stationären Bedingungen, bei der die Änderung der thermischen Diffusivität bestimmt wird.

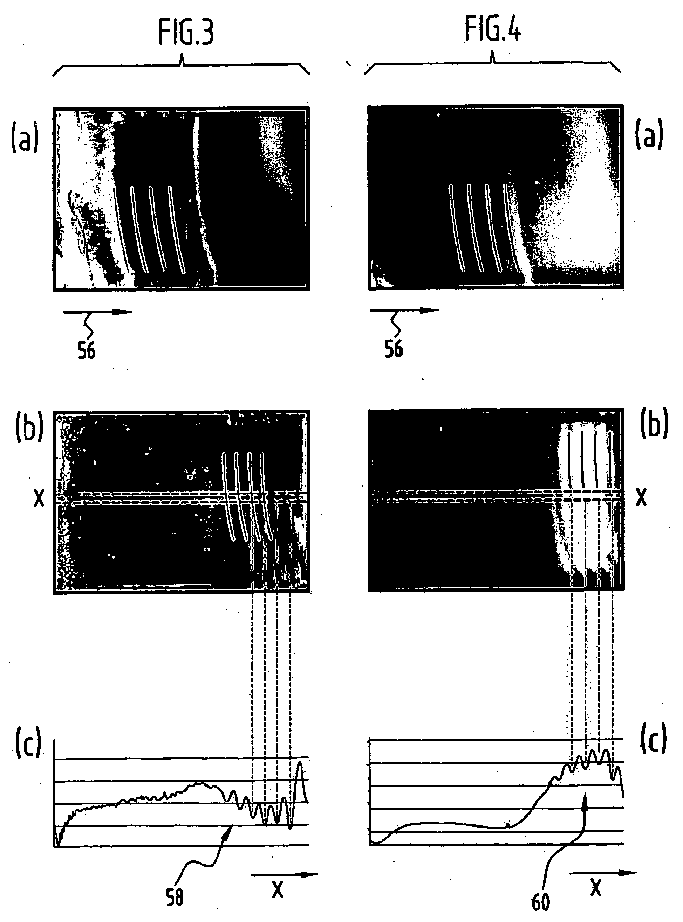

Aus der Frequenz und der Anzahl der Meßzyklen wird bei dem erfindungsgemäßen Verfahren die Geschwindigkeit der fortschreitenden Harzfront 32 in einer Bildebene ermittelt. Beispielsweise werden dazu Peakabstände (Figuren 3 und 4) im Phasenbild und/oder Amplitudenbild bestimmt.

Beispiele für Phasenbilder sind in den Figuren 3(a) und (b) dargestellt. Beispiele für Amplitudenbilder sind in den Figuren 4(a) und (b) dargestellt. Diese sind das Ergebnis mehrerer Meßzyklen als Integration über diese Meßzyklen.

Diese Phasenbilder und Amplitudenbilder wurden in einer Reflexionsmessung erhalten, wobei der Prüfling 34 bei einer Anordnung, wie sie in der Figur 1 gezeigt wurde, in einer Richtung 50 strahlungsbeaufschlagt wurde. Damit entspricht eine Oberfläche 52 der Anordnung 10, welche zu der Oberfläche des Verteilergewebes 20 kongruiert ist, der Oberfläche 42 bei der schematischen Anordnung gemäß Figur 2.

Die Bildebene 54 liegt senkrecht zu der Richtung 50. Eine Harzinfiltrationsrichtung 56 liegt parallel zur Bildebene 54.

In den Figuren 3(a) und 4(a) sind Harzfronten deutlich erkennbar. Diese wurden durch die in den Figuren eingezeichneten Markierungen darstellerisch herausgehoben.

Die Figuren 3(b) und 4(b) zeigen das weitere Fortschreiten der Harzfronten. Die Figuren 3(b) und 4(b) stellen verglichen zu den Figuren 3(a) und 4(a) eine Aufnahme zu einem späteren Zeitpunkt dar. Man erkennt aus den Figuren den keilförmigen Harzfrontenverlauf, wie er schematisch in Figur 1 eingezeichnet ist.

Die Figur 3(c) zeigt den Phasenverlauf längs der Linie X für das Phasenbild der Figur 3(b). Im Bereich 58 erkennt man wiederum den Harzfrontenverlauf.

Gleiches gilt für die Figur 4(c), welche die Amplitude längs der Richtung X für das Amplitudenbild der Figur 4(b) zeigt. Hier erkannt man in dem mit dem Bereich 58 räumlich zusammenfallenden Bereich 60 den Harzfrontenverlauf.

Lufteinschlüsse im Prüfling 34 können zu einer verschlechterten Bauteilqualität führen. Solche Lufteinschlüsse sind im Amplitudenbild und im Phasenbild erkennbar. Dadurch kann bei der Herstellung des Bauteils zerstörungsfrei erkannt werden, ob sich die Eigenschaften des infiltrierten Faserhalbzeugs 12 während der Herstellung verändern und damit wiederum kann erkannt werden - und zwar zerstörungsfrei -, ob ein Bauteil mit möglicherweise verminderter Qualität aufgrund von Lufteinschlüssen hergestellt wurde.

Es ist auch möglich, chemische Reaktionen des Harzsystems (der Matrix) zu erkennen, welche den Harzfrontenverlauf beeinflussen. Dadurch ist es grundsätzlich möglich, Aussagen über den Vernetzungsgrad des Bauteils über Messungen während der Herstellung des Bauteils zu gewinnen.

Mittels des erfindungsgemäßen Verfahrens läßt sich die Herstellung des Bauteils überwachen und sich so eine prozeßbegleitende Qualitätssicherung für das hergestellte Bauteil durchführen. Diese Überwachung läßt sich für alle Arten von Harzinfusions- und Harzinjektionsverfahren durchführen. Insbesondere läßt sich das Verfahren auch dann durchführen, wenn der Prüfling einen Schichtaufbau über Fasergelegelagen des Faserhalbzeugs 12 (Laminatschichten 14), Trennfolie 22, Verteilergewebe 20 und Vakuumfolie 18 aufweist.

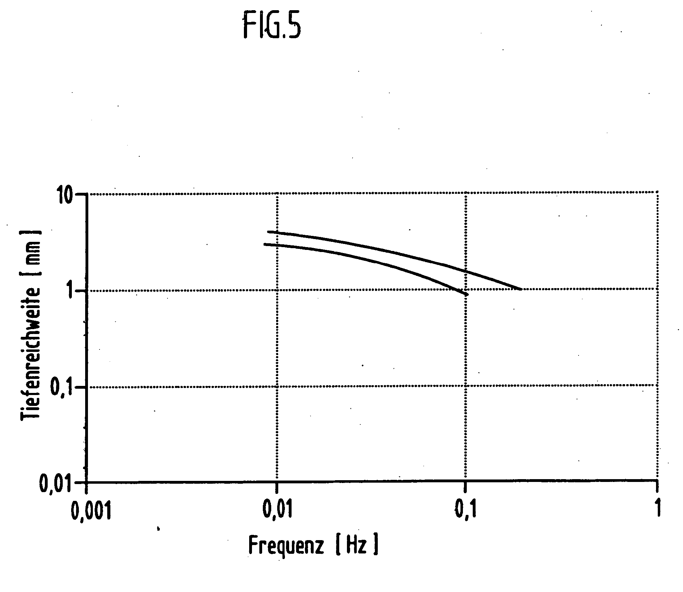

In Figur 5 ist die gemessene Tiefenreichweite in Abhängigkeit von der Frequenz in doppelt-logarithmischer Darstellung gezeigt. Es wurde dazu ein Prüfling präpariert, welcher aus acht Lagen diaxialem Carbonfaser-Gelege zusammengesetzt wurde. Es wurde dabei in einer Tiefe von 0 mm, 1 mm, 2 mm, 3 mm und 4 mm jeweils ein 10 mm breiter Folienstreifen angeordnet. Die Tiefenreichweite wurde dadurch bestimmt, welcher Lochstreifen erkennbar war.

Die obere Kurve ist die Tiefenreichweite, welche aus der Phasensignatur ermittelt wurde und die untere Kurve diejenige, welche aus der Amplitudensignatur ermittelt wurde. Man erkennt zum einen, daß die Tiefenreichweite bei der Auswertung über die Phasensignatur größer ist.

Zum anderen ist aus dem Diagramm der Figur 5 erkennbar, daß bei niedrigeren Frequenzen die Tiefenreichweite höher ist als bei höheren Frequenzen.

Grundsätzlich ist es so, daß die optimale Frequenz oder ein optimierter Frequenzbereich für die Modulation von dem speziellen Bauteil abhängig ist. Es kann aber vorgesehen sein, daß ein Kalibrierungsprüfling hergestellt wird, welcher grundsätzlich gleich aufgebaut ist wie das Bauteil und auch auf die gleiche Weise mit Harz infiltriert wird. In dem Kalibrierungsprüfling sind bestimmte ausgezeichnete Bereiche beispielsweise über Folienstreifen erzeugt. Die Frequenz wird so bestimmt, daß ein gewünschter Tiefenbereich detektiert wird. Mit der so ermittelten Frequenz läßt sich dann das herzustellende Bauteil während der Herstellung überprüfen.

Es ist grundsätzlich auch möglich, daß die Frequenz bei der Überprüfung der Herstellung des Bauteils variiert wird. Dies kann beispielsweise dazu dienen, eine optimierte Frequenz oder einen optimierten Frequenzbereich einzustellen. Wenn geeignete Frequenzen für bestimmte Bereiche (beispielsweise oberflächennahe oder Tiefenbereiche) bereits bekannt sind, dann kann durch eine Variation der Frequenzen während der Überprüfung auch eine Variation der überprüften Bereiche insebsondere bezüglich ihrer Tiefe relativ zur Oberfläche durchgeführt werden. Beispielsweise wird alternierend mit einer kleineren und einer größeren Frequenz untersucht. Dadurch lassen sich auch (mit der größeren Frequenz) oberflächennahe Bereiche und insbesondere das Verteilergewebe daraufhin untersuchen, ob Undichtigkeiten vorliegen. Insbesondere kann dadurch geprüft werden, ob Ausgasungen vorliegen oder ob Luft eindringt. Wenn eine kleinere Frequenz gewählt wird, dann lassen sich tiefere Bereiche untersuchen.

Insbesondere wird der Geschwindigkeitsverlauf der Harzfront ermittelt, indem beispielsweise zeitabhängig die Positionen von Peaks (wie in den Figuren 3(c) und 4(c) dargestellt) bestimmt werden. Über den ermittelten Geschwindigkeitsverlauf lassen sich Unregelmäßigkeiten der Harzinfiltration erkennen.

Es ist dadurch auch möglich, die Infiltrationszeit zu berechnen bzw. abzuschätzen. Dadurch wiederum läßt sich der Infiltrationsvorgang und damit die Bauteilherstellung automatisieren, da eben das Ende der Infiltration ermittelbar ist und dann entsprechend automatisch beispielsweise die Hauptzuführung abgeschaltet werden kann.

## Patentansprüche

1. Verfahren zur Überwachung der Herstellung eines Bauteils aus einem faserverstärkten Werkstoff, wobei das Bauteil durch Infiltration eines Faserhalbzeugs mit flüssigem Harz hergestellt wird, bei dem während des Infiltrationsvorgangs der Prüfling mit modulierten Wärmewellen thermisch angeregt wird und das Antwortsignal registriert wird.

2. Verfahren nach Anspruch 1, **dadurch gekennzeichnet, daß** der Prüfling flächig mit Wärmewellen beaufschlagt wird.

3. Verfahren nach Anspruch 1 oder 2, **dadurch gekennzeichnet, daß** das Antwortsignal in Reflexion ermittelt wird.

4. Verfahren nach einem der vorangehenden Ansprüche, **dadurch gekennzeichnet, daß** das Antwortsignal in Transmission ermittelt wird.

5. Verfahren nach einem der vorangehenden Ansprüche, **dadurch gekennzeichnet, daß** der Prüfling in Richtung eines Verteilergewebes mit Wärmewellen beaufschlagt wird.

6. Verfahren nach einem der vorangehenden Ansprüche, **dadurch gekennzeichnet, daß** das Antwortsignal durch eine Kamera registriert wird.

7. Verfahren nach einem der vorangehenden Ansprüche, **dadurch gekennzeichnet, daß** der Prüfling optisch bestrahlt wird.

8. Verfahren nach einem der vorangehenden Ansprüche, **dadurch gekennzeichnet, daß** die Wärmewellen intensitätsmoduliert sind.

9. Verfahren nach einem der vorangehenden Ansprüche, **dadurch gekennzeichnet, daß** ein Geschwindigkeitsprofil einer fortschreitenden Harzfront in der Phasensignatur und Amplitudensignatur ermittelt wird.

10. Verfahren nach einem der vorangehenden Ansprüche, **dadurch gekennzeichnet, daß** eine Amplitudensignatur-Auswertung durchgeführt wird.

11. Verfahren nach einem der vorangehenden Ansprüche, **dadurch gekennzeichnet, daß** eine Phasensignatur-Auswertung durchgeführt wird.

12. Verfahren nach Anspruch 10 oder 11, **dadurch gekennzeichnet, daß** die Amplitudensignatur und/oder die Phasensignatur über Fouriertransformation ermittelt werden.

13. Verfahren nach einem der Ansprüche 8 bis 12, **dadurch gekennzeichnet, daß** die gewählte Frequenz kleiner als 1 Hz ist.

14. Verfahren nach Anspruch 13, **dadurch gekennzeichnet, daß** die Frequenz kleiner als 0,5 Hz ist.

15. Verfahren nach einem der Ansprüche 8 bis 14, **dadurch gekennzeichnet, daß** die Frequenz größer als 0,0001 Hz ist.

16. Verfahren nach einem der vorangehenden Ansprüche, **dadurch gekennzeichnet, daß** in einem nicht-stationären Temperaturzustand gemessen wird.

17. Verfahren nach einem der vorangehenden Ansprüche, **dadurch gekennzeichnet, daß** der Prüfling einen Schichtaufbau aufweist mit Faserhalbzeugschichten.

18. Verfahren nach Anspruch 17, **dadurch gekennzeichnet, daß** ein Verteilergewebe für das Harz vorgesehen ist, welches auf dem Faserhalbzeug angeordnet ist.

19. Verfahren nach Anspruch 17 oder 18, **dadurch gekennzeichnet, daß** eine Vakuumfolie vorgesehen ist.

20. Verfahren nach einem der vorangehenden Ansprüche, **dadurch gekennzeichnet, daß** der Prüfling volumetrisch thermisch angeregt wird.

21. Verfahren nach einem der vorangehenden Ansprüche, **dadurch gekennzeichnet, daß** ein definierter Kalibrierungsprüfling hergestellt wird und an diesem eine geeignete Frequenz oder ein geeigneter Frequenzbereich für die Modulation ermittelt wird.

22. Verfahren nach einem der vorangehenden Ansprüche, **dadurch gekennzeichnet, daß** die Frequenz der Modulation variiert wird.

23. Verfahren nach Anspruch 22, **dadurch gekennzeichnet, daß** eine größere Frequenz zur Überprüfung oberflächennaher Bereiche und eine kleinere Frequenz zur Überprüfung tieferer Bereiche verwendet wird.

24. Verfahren nach einem der vorangehenden Ansprüche, **dadurch gekennzeichnet, daß** der Geschwindigkeitsverlauf einer Harzfront ermittelt wird.

25. Verfahren nach Anspruch 24, **dadurch gekennzeichnet, daß** über den ermittelten Geschwindigkeitsverlauf die Herstellung des Bauteils automatisiert wird.

## Claims

1. Method for monitoring the production of a component made of a fibre-reinforced material, wherein the component is produced by infiltrating a fibre preform with a liquid resin, in which method, during the infiltration process, the test piece is thermally excited with modulated thermal waves and the response signal is recorded.

2. Method in accordance with claim 1, **characterized in that** thermal waves are applied on the surface of the test piece.

3. Method in accordance with claim 1 or 2, **characterized in that** the response signal is determined in reflexion.

4. Method in accordance with any one of the preceding claims, **characterized in that** the response signal is determined in transmission.

5. Method in accordance with any one of the preceding claims, **characterized in that** thermal waves are applied to the test piece in the direction of a distribution fabric.

6. Method in accordance with any one of the preceding claims, **characterized in that** the response signal is recorded by a camera.

7. Method in accordance with any one of the preceding claims, **characterized in that** the test piece is exposed to optical radiation.

8. Method in accordance with any one of the preceding claims, **characterized in that** the thermal waves are intensity-modulated.

9. Method in accordance with any one of the preceding claims, **characterized in that** a velocity profile of a progressing resin front is determined from the phase signature and amplitude signature.

10. Method in accordance with any one of the preceding claims, **characterized in that** an amplitude signature evaluation is carried out.

11. Method in accordance with any one of the preceding claims, **characterized in that** a phase signature evaluation is carried out.

12. Method in accordance with claim 10 or 11, **characterized in that** the amplitude signature and/or the phase signature is/are determined by Fourier transformation.

13. Method in accordance with any one of claims 8 to 12, **characterized in that** the selected frequency is less than 1 Hz.

14. Method in accordance with claim 13, **characterized in that** the frequency is less than 0.5 Hz.

15. Method in accordance with any one of claims 8 to 14, **characterized in that** the frequency is greater than 0.0001 Hz.

16. Method in accordance with any one of the preceding claims, **characterized in that** measurements are taken in a non-steady-state temperature condition.

17. Method in accordance with any one of the preceding claims, **characterized in that** the test piece has a layered construction including fibre preform layers.

18. Method in accordance with claim 17, **characterized in that** a distribution fabric is provided for the resin, the distribution fabric being arranged on the fibre preform.

19. Method in accordance with claim 17 or 18, **characterized in that** a vacuum foil is provided.

20. Method in accordance with any one of the preceding claims, **characterized in that** the test piece is thermally excited in the bulk.

21. Method in accordance with any one of the preceding claims, **characterized in that** a defined calibration test piece is prepared and used to determine an appropriate frequency or an appropriate frequency range for the modulation.

22. Method in accordance with any one of the preceding claims, **characterized in that** the frequency of the modulation is varied.

23. Method in accordance with claim 22, **characterized in that** a higher frequency is used to examine near-surface regions and a lower frequency is used to examine deeper regions.

24. Method in accordance with any one of the preceding claims, **characterized in that** the velocity profile of a resin front is determined.

25. Method in accordance with claim 24, **characterized in that** the production of the component is automated via the determined course of velocity.

## Revendications

1. Procédé pour la surveillance de la fabrication d'un composant à partir d'un matériau renforcé par des fibres, le composant étant fabriqué avec une résine liquide par infiltration d'un produit semi-fini fibreux, pour lequel pendant le processus d'infiltration, l'échantillon est stimulé de manière thermique avec des ondes thermiques modulées et le signal de réponse est enregistré.

2. Procédé selon la revendication 1, **caractérisé en ce que** l'échantillon est soumis par couche à des ondes thermiques.

3. Procédé selon la revendication 1 ou 2, **caractérisé en ce que** le signal de réponse est déterminé en réflexion.

4. Procédé selon l'une quelconque des revendications précédentes, **caractérisé en ce que** le signal de réponse est déterminé en transmission.

5. Procédé selon l'une quelconque des revendications précédentes, **caractérisé en ce que** l'échantillon est soumis à des ondes thermiques en direction d'une toile de répartition.

6. Procédé selon l'une quelconque des revendications précdentes, **caractérisé en ce que** le signal de réponse est enregistré par une caméra.

7. Procédé selon l'une quelconque des revendications précédentes, **caractérisé en ce que** l'échantillon est irradié de manière optique.

8. Procédé selon l'une quelconque des revendications précédentes, **caractérisé en ce que** l'intensité des ondes thermiques est modulée.

9. Procédé selon l'une quelconque des revendications précédentes, **caractérisé en ce que** le profil de vitesse du front de résine en progression est déterminé au cours de la signature de phases et de la signature d'amplitudes.

10. Procédé selon l'une quelconque des revendications précédentes, **caractérisé en ce qu'**une évaluation de la signature d'amplitudes est exécutée.

11. Procédé selon l'une quelconque des revendications précédentes, **caractérisé en ce qu'**une évaluation de la signature de phases est exécutée.

12. Procédé selon la revendication 10 ou 11, **caractérisé en ce que** la signature d'amplitudes et/ou la signature de phases sont déterminées par l'intermédiaire d'une transformation de Fourier.

13. Procédé selon l'une quelconque des revendications 8 à 12, **caractérisé en ce que** la fréquence choisie est inférieure à 1 Hz.

14. Procédé selon la revendication 13, **caractérisé en ce que** la fréquence est inférieure à 0,5 Hz.

15. Procédé selon l'une quelconque des revendications 8 à 14, **caractérisé en ce que** la fréquence est supérieure à 0,0001 Hz.

16. Procédé selon l'une quelconque des revendications précédentes, **caractérisé en ce que** les mesures sont effectuées dans un état non stationnaire de la température.

17. Procédé selon l'une quelconque des revendications précédentes, **caractérisé en ce que** l'échantillon présente une structure en couches comportant des couches de produit semi-fini fibreux.

18. Procédé selon la revendication 17, **caractérisé en ce qu'**une toile de répartition est prévue pour la résine, laquelle est disposée sur le produit semi-fini fibreux.

19. Procédé selon la revendication 17 ou 18, **caractérisé en ce qu'**un film sous vide est prévu.

20. Procédé selon l'une quelconque des revendications précédentes, **caractérisé en ce que** l'échantillon est stimulé en volume thermiquement.

21. Procédé selon l'une quelconque des revendications précédentes, **caractérisé en ce qu'**un échantillon de calibrage défini est fabriqué, et **en ce qu'**une fréquence appropriée ou une plage de fréquences appropriée est déterminée pour la modulation sur celui-ci.

22. Procédé selon l'une quelconque des revendications précédentes, **caractérisé en ce que** la fréquence de la modulation varie.

23. Procédé selon la revendication 22, **caractérisé en ce qu'**une fréquence plus grande est utilisée pour surveiller les zones en surface, et **en ce qu'**une fréquence plus petite est utilisée pour surveiller des zones plus profondes.

24. Procédé selon l'une quelconque des revendications précédentes, **caractérisé en ce qu'**on détermine l'évolution de la vitesse d'un front de résine.

25. Procédé selon la revendication 24, **caractérisé en ce que** la fabrication du composant est automatisée par l'intermédiaire de l'évolution de la vitesse déterminée,
